# FASCICULE DE BREVET EUROPEEN

(11) **EP 3 019 713 B1**
(45) Date de publication et mention de la délivrance du brevet: **30.08.2017**
(21) Numéro de dépôt: 14738790.6
(22) Date de dépôt: 07.07.2014
(51) Int. Cl.: F01D 25/16, F02K 1/04, F02C 7/20, B64D 27/26, F01D 9/02, F01D 25/24, F01D 25/30

(54) **CARTER DE TURBOMACHINE A BRIDE DECOUPEE**
TURBINENMOTORGEHÄUSE MIT EINEM FLANSCHAUSSCHNITT
TURBINE ENGINE CASING HAVING A CUT-OUT FLANGE

(30) Priorité: 09.07.2013 FR 1356730
(43) Date de publication de la demande: 18.05.2016
(73) Titulaire: Snecma, 75015 Paris (FR)
(72) Inventeur: DEBRAY, Benoit, F-77550 Moissy-Cramayel Cédex (FR); GHOSAROSSIAN-PRILLIEUX, Grégory, F-77550 Moissy-Cramayel Cédex (FR); DE SOUSA, Mario, F-77550 Moissy-Cramayel Cédex (FR); POMMIER, Nicolas, F-77550 Moissy-Cramayel Cédex (FR); NOEL, Frédéric, F-77550 Moissy-Cramayel Cédex (FR)
(74) Mandataire: Regimbeau
(86) Numéro de dépôt international: PCT/EP2014/064450
(87) Numéro de publication internationale: WO 2015/004059

(56) Documents cités:
- EP-A1- 1 970 541
- EP-A1- 2 003 293
- EP-A1- 2 003 312
- EP-A2- 1 882 827

## Description

### DOMAINE TECHNIQUE GENERAL ET CONTEXTE DE L'INVENTION

Le domaine de la présente invention est celui des turbomachines et plus particulièrement des carters de turbomachine, notamment des carters d'échappement de turboréacteur, et de ses composants.

Un turboréacteur comprend généralement une soufflante, un corps primaire comprenant à son aval un carter d'échappement et une tuyère. Selon le modèle de turboréacteur, notamment ceux à double flux, on intègre un mélangeur au début de la tuyère pour favoriser le mélange d'air froid et d'air chaud afin d'optimiser la poussée totale.

Dans le cas de turboréacteurs pourvus d'un mélangeur, ce dernier est fixé au carter d'échappement par l'intermédiaire d'une bride coopérant avec une bride du carter d'échappement, plus spécifiquement la bride dit aval du carter d'échappement positionnée sur une virole extérieure du carter d'échappement.

La bride du mélangeur et la bride aval de la virole du carter d'échappement doivent être fixées en regard l'une de l'autre pour des questions d'étanchéité et de tenue mécanique de l'ensemble carter-mélangeur.

Généralement, le carter d'échappement est maintenu dans un anneau support via des bielles attachées d'une part au carter d'échappement, et d'autre part à un anneau de support définissant un canal de d'air froid, mais ce type d'assemblage nécessite l'ajout de nombreuses pièces telles que des inserts, et nécessite également une maintenance complexe.

On connaît par exemple de la demande de brevet FR 2 975 131 A1, une solution permettant de palier au problème d'assemblage du carter à l'anneau de support en proposant un type de liaison entre l'anneau porteur du canal d'air froid et le carter d'échappement qui permet des déplacements relatifs du carter plus souples et moins contraignants, notamment par le fait que le carter d'échappement comprend une virole extérieure comportant des points d'attache nommés chapes dont les oreilles s'étendent radialement à partir de la virole extérieure et qui sont aptes à recevoir des bielles destinées à fournir un support au canal de flux d'air froid.

Dans certaines configurations de carter d'échappement, les chapes sont situées très bas radialement pour satisfaire aux exigences de dimensionnement en tenue mécanique tout en optimisant l'encombrement du moteur. C'est notamment le cas dans la demande de brevet FR 2 975 131 A1, notamment par le fait que les chapes sont réalisées à l'intérieur de dépressions dans la virole extérieure. Dans ces modes de réalisation, la virole extérieure du carter d'échappement est réalisée par usinage et comprend une bride dite amont et une bride dite aval qui sont rapportées ou soudées aux extrémités de la virole et l'usinage et l'alésage des chapes se fait postérieurement.

On entendra par bride aval, la bride coopérant avec la bride du mélangeur et bride amont celle qui se trouve à l'opposé de la bride aval.

Une fois la virole réalisée et la bride aval rapportée, on s'aperçoit que cette dernière vient obstruer l'accès aux alésages des chapes ce qui rend l'usinage des chapes difficile, ne permet pas d'opération de réparation des chapes en cas de dégradations par exemple au cours de la vie du moteur et ne facilite pas l'accès pour le montage horizontal des axes de suspension assurant la liaison entre les bielles et les chapes. De plus, le poids et l'encombrement de l'ensemble n'est pas optimal. Un carter selon l'art antérieur est connu aussi du document EP 2003293 A1.

### PRESENTATION DE L'INVENTION

La présente invention a pour but de remédier aux inconvénients de l'état de la technique en proposant une solution moins coûteuse, facilement usinable et plus légère permettant ainsi un gain de matière et de poids assez important.

A cet effet, l'objet de l'invention concerne un carter de turbomachine, notamment un carter d'échappement de turboréacteur, comprenant au moins une virole et au moins une bride délimitant au moins partiellement une extrémité de ladite virole, et au moins une chape positionnée au moins en partie sur la surface externe de la virole, ladite chape comprenant un alésage apte à recevoir un élément d'attache du carter d'échappement à un support, la bride comprenant une découpe d'accès sensiblement coaxiale à l'alésage de ladite au moins une chape, ladite découpe d'accès permettant un accès à l'alésage de ladite chape, ladite découpe d'accès étant ménagée au niveau d'une découpe de dégagement plus large de la bride et constituant une échancrure sur ladite découpe de dégagement.

L'avantage d'avoir ces découpes d'accès et de dégagement est d'une part, lors de l'usinage de la chape, de pouvoir faire passer les outils d'usinage facilement et en cas de réparation d'avoir accès à l'alésage de la chape, et d'autre part, d'agrandir la surface d'exposition de la chape permettant à la fois un accès plus facile à l'alésage ou à la chape ainsi que d'alléger la bride aval ce qui réduit le coût et la matière de la pièce.

Selon une autre caractéristique de l'invention, la découpe d'accès réalisée sur la bride est un feston et/ou la découpe de dégagement est un feston. L'avantage d'usiner en feston, de préférence avec un grand rayon de courbure permet d'enlever plus de matière pour alléger la pièce tout en conservant une bonne tenue mécanique de la bride.

Le carter est avantageusement complété par les caractéristiques suivantes, prises seules ou en une quelconque de leur combinaison techniquement possible :
- la découpe d'accès est positionnée sensiblement au milieu de la découpe de dégagement;
- la virole est cylindrique, la bride étant positionnée sur la circonférence d'une des extrémités de ladite virole;
- la virole comprend plusieurs chapes positionnées sur la surface externe de ladite virole;
- la bride comprend une pluralité de découpes d'accès et une pluralité de découpes de dégagement positionnées en regard de chaque chape;
- la bride comprend des points d'attache saillants ménagés entre deux découpes de dégagement et aptes à coopérer avec une bride d'un élément, notamment un mélangeur, de turbomachine;
- les points d'attache saillants sont formés par les bords des découpes de dégagement;
- la découpe de dégagement comprend des bords délimitant une ouverture comprenant la découpe d'accès et exposant ladite chape et l'alésage ménagé dans ladite chape.

Un second objet de l'invention concerne une turbomachine, notamment un turboréacteur, comprenant un carter, notamment un carter d'échappement, tel que décrit plus haut. De préférence, la bride de l'élément est en regard de la bride du carter et obstrue au moins partiellement la découpe d'accès de la bride du carter.

Un troisième objet de l'invention concerne un procédé d'usinage d'un carter, notamment d'échappement, pour une turbomachine, notamment un turboréacteur, selon la présente invention.

### PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels:
- la figure 1 représente une vue de face d'un carter d'échappement de turboréacteur selon la présente invention,
- la figure 2 représente un détail de la figure 1 montrant précisément l'usinage réalisé sur la bride aval du carter d'échappement selon la présente invention,
- la figure 3 représente une vue partielle de la virole du carter d'échappement selon la présente invention, et,
- la figure 4 représente une vue en coupe selon l'axe A-A de la figure 3 selon la présente invention.

### DESCRIPTION DETAILLEE

La description qui est faite en référence s'applique à un carter d'échappement de turboréacteur en tant que carter de turbomachine selon l'invention.

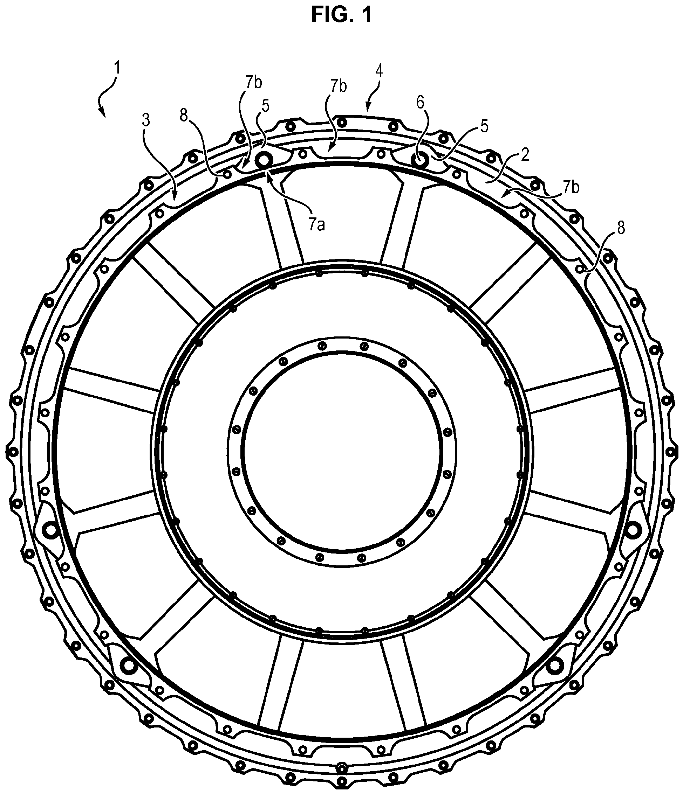

La figure 1 représente un carter d'échappement 1 d'un turboréacteur selon la présente invention, comprenant une virole 2 extérieure qui est sensiblement cylindrique. Dans l'exemple illustré, cette virole 2 comprend deux brides 3, 4, parmi lesquelles la bride référencée 3 est la bride dite aval apte à coopérer avec une bride de mélangeur 9 de turboréacteur et la bride référencée 4 est la bride amont. Les brides 3, 4 délimitent chacune au moins partiellement une extrémité opposée de la virole 2. Bien entendu, le nombre de brides n'est pas limité à l'exemple représenté par les figures et ne sont pas nécessairement uniquement disposées aux extrémités de la virole 2.

Dans l'exemple illustré en figure 1, la virole 2 comprend au moins en partie sur sa surface externe plusieurs chapes 5 dans chacune desquelles un alésage 6 est ménagé et étant apte à recevoir un élément d'attache du carter d'échappement 1 à un support (non représenté) comme par exemple une bielle. Les chapes 5 sont exposées ainsi que leur alésage 6 par des découpes 7a, 7b qui sont positionnées au moins en regard de chaque chape 5.

Préférentiellement, la virole 2 comprend six chapes 5 sur sa circonférence qui sont réparties deux à deux et côte à côte comme on peut le voir dans l'exemple de la figure 1. Dans cet exemple, seuls six bras du carter sont prolongés par des chapes. Bien évidemment, le nombre de chapes n'est pas limité et peut être d'une quantité supérieure ou inférieure à celle de l'exemple illustré.

En figure 1, la bride aval 3 comprend plusieurs découpes de dégagement 7b et entre chacune d'elles sont formés par les bords de celles-ci des points d'attache saillants référencés 8 permettant entre autres l'attachement de la bride aval 3 avec la bride du mélangeur 9 du turboréacteur.

Bien entendu, il est possible que la bride amont 4 soit également pourvue de ces découpes 7b de manière régulière ou irrégulière sur la circonférence de la bride amont 4 et en regard ou non de celles de la bride aval 3.

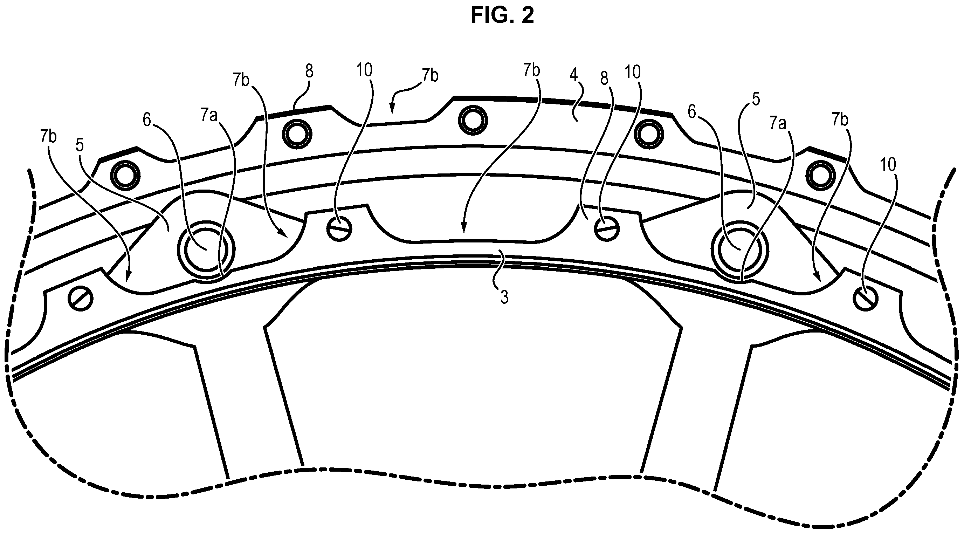

La figure 2 représente un détail de la figure 1 selon la présente invention et précisément l'usinage réalisé sur la bride aval 3 du carter d'échappement 1 selon la présente invention.

Dans l'exemple de réalisation illustré en figure 2, la bride aval 3 comprend au moins une découpe d'accès 7a sensiblement coaxiale à l'alésage 6 de la chape 5, ce qui permet lors de l'usinage de la chape 5 de pouvoir faire passer les outils d'usinage facilement et en cas de réparation d'avoir accès à l'alésage 6. De plus, grâce à ce type de découpe d'accès 7a, on facilite la cinétique de montage des axes de suspension prévus entres les chapes 5.

De plus, la bride aval 3 comprend également au moins une découpe de dégagement 7b, ladite découpe d'accès 7a étant ménagée au niveau de la découpe de dégagement 7b plus large de la bride et constitue une échancrure sur ladite découpe de dégagement 7b, ce qui permet d'agrandir la surface d'exposition de la chape 5 permettant à la fois un accès plus facile à l'alésage 6 ou à la chape 5 ainsi que d'alléger la bride aval 3 en réduisant le coût et la matière.

Autrement dit, dans l'exemple de réalisation illustré aux figures 1 à 4, la deuxième découpe 7b comprend des bords délimitant une ouverture comprenant la première découpe 7a et exposant ladite chape 5 et l'alésage 6 ménagé dans ladite chape 5.

La découpe de dégagement 7b expose la chape 5, c'est-à-dire que la découpe de dégagement 7b laisse à découvert le côté de la chape 5 qui est en direction de la bride 3, dégageant ainsi une partie de la chape 5 par rapport à la bride 3. De même, la découpe d'accès 7a expose l'alésage 6 ménagé dans ladite chape 5, c'est-à-dire que la découpe d'accès 7a laisse à découvert le côté de l'alésage 6 qui est en direction de la bride 3, laissant ainsi accès à l'alésage 6 du côté de la découpe d'accès 7b.

Selon une caractéristique de l'invention et comme illustré sur les figures 1, 2 et 3, la découpe d'accès 7a réalisée sur la bride aval 3 est un feston, c'est-à-dire une découpe présentant une forme globale en U, avec des bords dont le galbe augmente progressivement vers le bas. De plus, la découpe de dégagement 7b peut être également un feston. L'avantage d'usiner en feston, notamment avec un grand rayon de courbure, permet d'enlever le plus de matière possible tout en conservant une bonne tenue mécanique de la bride aval 3.

Dans l'exemple illustré aux figures 1 à 4, la bride aval 3 est munie d'un double festonnage par les découpes d'accès 7a et les découpes de dégagement 7b, permettant un accès facile à l'alésage et aux chapes 5 ainsi qu'une conception et une industrialisation sans surcoût significatifs.

Selon l'exemple illustré en figures 1, 2 et 3, la découpe d'accès 7a est positionnée sensiblement au milieu de la découpe de dégagement 7b. Cependant le positionnement de la découpe d'accès 7a dépend de l'alésage 6 usiné dans la chape 5, il est donc possible que dans d'autres modes de réalisation non représentés de la présente invention, la découpe d'accès 7a soit agencée différemment comme par exemple non centrée par rapport à la découpe de dégagement 7b. Cependant, la découpe d'accès 7a doit nécessairement être usinée co-axialement à l'alésage 6 de la chape 5.

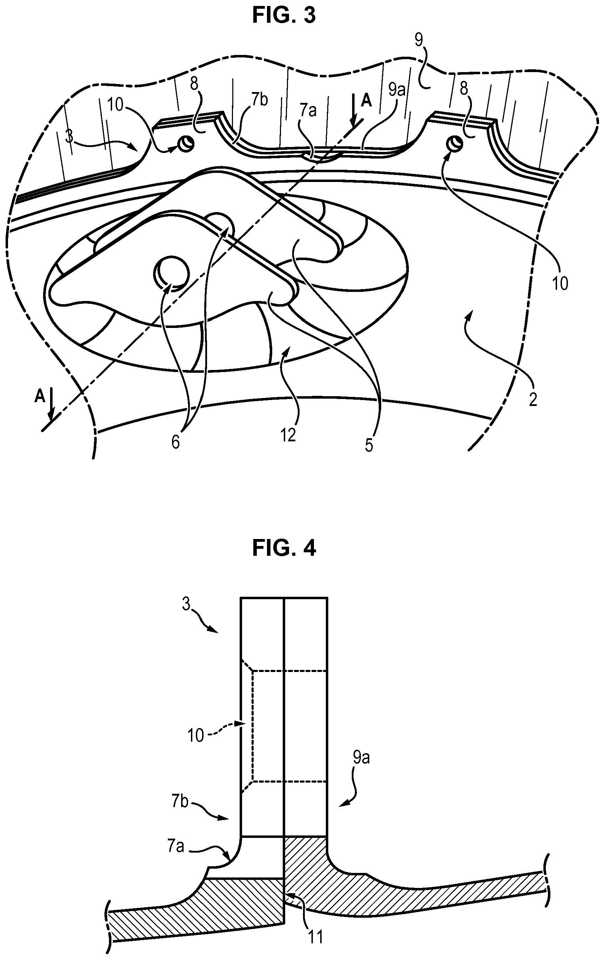

Comme visible notamment sur la figure 3, la bride aval 3 comprend des points d'attache saillants 8 délimités par les bords des découpes de dégagement 7b. Plus particulièrement dans l'exemple illustré en figures 2 et 3, les points d'attache saillants 8 sont agencés entre deux découpes de dégagement 7b et un des bords de chacune d'elles délimitent un côté du point d'attache saillant 8. Ces points d'attache saillants 8 sont positionnés lors de l'assemblage du carter d'échappement 1 avec le mélangeur 9, en regard d'une bride 9a du mélangeur 9 avec des points d'attache correspondants comme on peut le voir plus précisément sur la figure 3 et la figure 4.

Des alésages 10 au milieu de ces points d'attache 8 permettent d'y faire passer des éléments de fixation tels que des boulons. Pour des raisons de tenue mécanique, il est préférable que ces alésages 10 soient entourés de suffisamment de matière, c'est-à-dire que les points saillants 8 doivent être assez larges, typiquement de l'ordre de 1 à 1,5 fois le diamètre de l'alésage 10 de chaque côté de celui-ci.

La conception et le dimensionnement des points d'attache saillants 8 sur la bride aval 3 ou amont 4 ou la bride 9a du mélangeur 9 dépendent notamment du rayon de courbure des découpes de dégagement 7b, et de l'alésage qui est prévu dans chaque point d'attache 8, permettant la fixation de ces brides à d'autres composants du turboréacteur ou à d'autres brides d'autres composants.

La figure 3 montre un exemple de réalisation dans lequel la virole extérieure 2 est pourvue d'une dépression 10 dans laquelle sont usinées les chapes 5. Ces dépressions 10 permettent d'abaisser radialement les chapes 5 pour satisfaire aux exigences de dimensionnement en tenue mécanique et d'abaisser également l'alésage 6 pour le rapprocher radialement au plus près du rayon de la virole 2 hors dépression 10.

Selon une caractéristique de l'invention visible en figure 3, la bride 9a du mélangeur 9 est en regard de la bride aval 3 du carter d'échappement 1 et obstrue la découpe d'accès 7a. L'usinage de cette découpe d'accès 7a est réalisé pour conserver une étanchéité satisfaisante de l'ensemble, notamment au regard des tolérances d'usinage et des déformations, par exemple thermiques. Cependant, l'obstruction de la découpe d'accès 7a par la bride 9a du mélangeur 9 pourrait être partielle si la bride 9a du mélangeur 9 était usinée différemment dans un autre mode de réalisation de l'invention non représenté.

Comme visible sur les figures 3 et 4, les brides 3, 9a sont pourvues toutes deux d'une découpe de dégagement 7b de sorte que ces deux coupes de dégagement 7b soient positionnées, lors de l'assemblage, en regard l'une de l'autre et qu'il soit assuré une étanchéité et une bonne tenue mécanique entre le carter d'échappement 1 et le mélangeur du turboréacteur.

La figure 4 représente une vue en coupe selon l'axe A-A de la figure 3 de la présente invention et permet de visualiser plus précisément la coopération entre la bride aval 3 et la bride 9a du mélangeur 9. Comme dit précédemment, ces deux brides 3, 9a, lors de l'assemblage du carter d'échappement 1 et du mélangeur doivent être en regard l'une de l'autre et pour des questions d'étanchéité notamment, une surface de recouvrement doit donc être prévue comme illustré à titre d'exemple à la figure 4 et référencé en 11. Afin de conserver une surface de recouvrement 11 assurant une bonne étanchéité, la découpe de dégagement 7b conserve une hauteur de bride suffisante pour accueillir l'échancrure formée par la découpe d'accès 7a dans cette découpe de dégagement 7b sans que celle-ci ne mette en péril cette étanchéité. A titre d'exemple, en partant d'une bride de hauteur d'environ 7 ou 8 mm, la découpe de dégagement 7b peut être de l'ordre de 4 à 5 mm, tandis que l'échancrure formée par la découpe d'accès 7a dans cette découpe de dégagement 7b peut alors être de l'ordre du millimètre.

La présente invention a également pour objet une turbomachine, telle qu'un turboréacteur, comprenant un carter 1, tel qu'un carter d'échappement de turboréacteur comme décrit plus haut et illustré aux figures 1 à 4, et un élément 9 tel qu'un mélangeur de turboréacteur comprenant une bride 9a qui est en regard de la bride aval 3 du carter d'échappement 1 et obstrue au moins partiellement la découpe d'accès 7a de ladite bride 3 du carter d'échappement 1.

La présente invention a également pour objet le procédé d'usinage du carter d'échappement 1 décrit ci-dessus et comprend au moins les étapes suivantes:
- la réalisation d'une virole 2 avec au moins une bride 3, 4 ;
- l'usinage d'au moins une chape 5 sur la surface externe de la virole 2 ;
- la formation de la découpe de dégagement 7b de la bride 3, 4 de sorte que la chape 5 est exposée ;
- l'alésage 6 des chapes 5 ;
- la formation de la découpe d'accès 7a dans la bride 3, 4 co-axialement à l'alésage 6 de la chape 5.

Bien entendu, l'invention décrite ci-dessus s'applique aussi bien à un carter d'échappement de turboréacteur qu'à d'autres types de carter de turbomachine. Ainsi, elle n'est pas limitée à l'exemple de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Carter (1) de turbomachine, notamment carter d'échappement de turboréacteur, comprenant au moins une virole (2) et au moins une bride (3, 4) délimitant au moins partiellement une extrémité de ladite virole (2), et au moins une chape (5) positionnée au moins en partie sur la surface externe de la virole (2), ladite chape (5) comprenant un alésage (6) apte à recevoir un élément d'attache du carter (1) à un support, la bride comprenant une découpe d'accès (7a) sensiblement coaxiale à l'alésage (6) de ladite au moins une chape (5), ladite découpe d'accès (7a) permettant un accès à l'alésage (6), **caractérisé en ce que** ladite découpe d'accès (7a) est ménagée au niveau d'une découpe de dégagement (7b) plus large de la bride (3,4) et constitue une échancrure sur ladite découpe de dégagement (7b).

2. Carter selon la revendication 1, dans lequel la découpe d'accès (7a) est de forme en feston et/ou la découpe de dégagement (7b) est de forme en feston.

3. Carter selon l'une quelconque des revendications 1 ou 2, dans lequel la découpe d'accès (7a) est positionnée sensiblement au milieu de la découpe de dégagement (7b).

4. Carter selon l'une quelconque des revendications 1 à 3, dans lequel la découpe de dégagement (7b) expose la chape (5) et la découpe d'accès (7a) expose l'alésage (6) ménagé dans ladite chape (5).

5. Carter selon l'une quelconque des revendications 1 à 4, dans lequel la virole (2) est cylindrique, la bride (3, 4) étant positionnée sur la circonférence d'une des extrémités de ladite virole (2).

6. Carter selon l'une quelconque des revendications 1 à 5, dans lequel la virole (2) comprend plusieurs chapes (5) positionnées sur la surface externe de ladite virole (2).

7. Carter selon la revendication 6, dans lequel la bride (3, 4) comprend une pluralité de découpes d'accès (7a) et une pluralité de découpes de dégagement (7b) positionnées en regard de chaque chapes (5).

8. Carter selon la revendication 7, dans lequel la bride (3,4) comprend des points d'attache saillants (8) ménagés entre deux découpes de dégagement (7b) et aptes à coopérer avec une bride d'un élément (9) de turbomachine.

9. Turbomachine, notamment turboréacteur, comprenant un carter (1), notamment un carter d'échappement, selon l'une quelconque des revendications 1 à 8 et un élément (9), notamment un mélangeur, comprenant une bride (9a), **caractérisé en ce que** la bride (9a) de l'élément (9) est en regard de la bride (3) du carter (1) et obstrue au moins partiellement la découpe d'accès (7a) de ladite bride (3) du carter (1).

10. Procédé d'usinage d'un carter (1) pour turbomachine selon la revendication 9, **caractérisé en ce qu'**il comprend au moins les étapes suivantes :
- réalisation d'une virole (2) avec au moins une bride (3, 4),
- usinage d'au moins une chape (5) sur la surface externe de la virole (2),
- formation de la découpe de dégagement (7b) de la bride (3, 4) de sorte que la chape (5) est exposée,
- alésage (6) des chapes (5),
- formation de la découpe d'accès (7a) dans la bride (3) co-axialement à l'alésage (6) de la chape (5).

## Patentansprüche

1. Gehäuse (1) eines Turbinenmotors, insbesondere Auslassgehäuse eines Turboreaktors, umfassend mindestens eine Ummantelung (2) und mindestens einen Flansch (3, 4), der mindestens teilweise ein Ende der Ummantelung (2) begrenzt, und mindestens einem Gabelkopf (5), die mindestens zum Teil auf der äußeren Fläche der Ummantelung (2) positioniert ist, wobei der Gabelkopf (5) eine Bohrung (6) umfasst, die imstande ist, ein Befestigungselement des Gehäuses (1) auf einem Träger aufzunehmen, wobei der Flansch einen zur Bohrung (6) des mindestens einen Gabelkopfes (5) etwa koaxialen Zugangsausschnitt (7a) umfasst, wobei der Zugangsausschnitt (7a) einen Zugang zu der Bohrung (6) erlaubt, **dadurch gekennzeichnet, dass** der Zugangsausschnitt (7a) im Bereich eines Freigabeausschnitts (7b) ausgebildet ist, der breiter als der Flansch (3,4) ist, und eine Aussparung auf dem Freigabeausschnitt (7b) darstellt.

2. Gehäuse nach Anspruch 1, wobei der Zugangsausschnitt (7a) bogenförmig ist und/oder der Freigabeausschnitt (7b) bogenförmig ist.

3. Gehäuse nach einem der Ansprüche 1 oder 2, wobei der Zugangsausschnitt (7a) etwa in der Mitte des Freigabeausschnitts (7b) positioniert ist.

4. Gehäuse nach einem der Ansprüche 1 bis 3, wobei der Freigabeausschnitt (7b) den Gabelkopf (5) exponiert und der Zugangsausschnitt (7a) die in den Gabelkopf (5) eingearbeitete Bohrung (6) exponiert.

5. Gehäuse nach einem der Ansprüche 1 bis 4, wobei die Ummantelung (2) zylindrisch ist, wobei der Flansch (3, 4) auf dem Umfang eines der Enden der Ummantelung (2) positioniert ist.

6. Gehäuse nach einem der Ansprüche 1 bis 5, wobei die Ummantelung (2) mehrere Gabelköpfe (5) umfasst, die auf der äußeren Fläche der Ummantelung (2) positioniert sind.

7. Gehäuse nach Anspruch 6, wobei der Flansch (3, 4) eine Vielzahl von Zugangsausschnitten (7a) und eine Vielzahl von Freigabeausschnitten (7b) umfasst, die gegenüber jeder Abdeckung (5) positioniert sind.

8. Gehäuse nach Anspruch 7, wobei der Flansch (3,4) hervorstehende Befestigungspunkte (8) umfasst, die zwischen zwei Freigabeausschnitten (7b) ausgebildet sind und imstande, mit einem Flansch eines Elements (9) eines Turbinenmotors zusammenzuwirken.

9. Turbinenmotors, insbesondere Turboreaktor, umfassend ein Gehäuse (1), insbesondere ein Auslassgehäuse, nach einem der Ansprüche 1 bis 8 und ein Element (9), insbesondere einen Mischer, umfassend einen Flansch (9a), **dadurch gekennzeichnet, dass** der Flansch (9a) des Elements (9) gegenüber dem Flansch (3) des Gehäuses (1) ist und mindestens teilweise den Zugangsausschnitt (7a) des Flanschs (3) des Gehäuses (1) verschließt.

10. Bearbeitungsverfahren eines Gehäuses (1) für Turbinenmotor nach Anspruch 9, **dadurch gekennzeichnet, dass** es mindestens die folgenden Schritte umfasst:
- Herstellen einer Ummantelung (2) mit mindestens einem Flansch (3, 4),
- Bearbeiten mindestens eines Gabelkopfes (5) auf der äußeren Fläche der Ummantelung (2),
- Bilden des Freigabeausschnitts (7b) des Flanschs (3, 4), so dass der Gabelkopf (5) exponiert ist,
- Bohren (6) dem Gabelkopf (5),
- Bilden des Zugangsausschnitts (7a) im Flansch (3) koaxial zur Bohrung (6) des Gabelkopfes (5).

## Claims

1. A casing (1) of a turbomachine, particularly an exhaust casing of a turbojet, comprising at least one ferrule (2) and at least one flange (3, 4) delimiting at least partially one end of said ferrule (2), and at least one clevis (5) positioned at least in part on the outer surface of the ferrule (2), said clevis (5) comprising a bore (6) capable of receiving an element for attaching the casing (1) to a support, the flange comprising an access cut-out (7a) substantially coaxial with the bore (6) of said at least one clevis (5), said access cut-out (7a) allowing access to the bore (6), **characterized in that** said access cut-out (7a) is arranged in a larger release cut-out (7b) in the flange (3, 4) and constitutes an indentation on said release cut-out (7b).

2. The casing according to claim 1, wherein the access cut-out (7a) is in the form of a festoon and/or the release cut-out (7b) is in the form of a festoon.

3. The casing according to any one of claims 1 or 2, wherein the access cut-out (7a) is positioned substantially in the middle of the release cut-out (7b) .

4. The casing according to any one of claims 1 to 3, wherein the release cut-out (7b) exposes the clevis (5) and the access cut-out (7a) exposes the bore (6) arranged in said clevis (5).

5. The casing according to any one of claims 1 to 4, wherein the ferrule (2) is cylindrical, the flange (3, 4) being positioned on the circumference of one of the ends of said ferrule (2).

6. The casing according to any one of claims 1 to 5, wherein the ferrule (2) comprises several clevises (5) positioned on the outer surface of said ferrule (2) .

7. The casing according to claim 6, wherein the flange (3, 4) comprises a plurality of access cut-outs (7a) and a plurality of release cut-outs (7b) positioned facing each clevis (5).

8. The casing according to claim 7, wherein the flange (3, 4) comprises protruding attachment points (8) arranged between two release cut-outs (7b) and capable of cooperating with a flange of an element (9) of a turbomachine.

9. A turbomachine, particularly a turbojet, comprising a casing (1), particularly an exhaust casing, according to any one of claims 1 to 8, and an element (9), particularly a mixer, comprising a flange (9a), **characterized in that** the flange (9a) of the element (9) is facing the flange (3) of the casing (1) and obstructs at least partially the access cut-out (7a) of said flange (3) of the casing (1) .

10. A method of machining a casing (1) for a turbomachine according to claim 9, **characterized in that** it comprises at least the following steps:
- making a ferrule (2) with at least one flange (3, 4),
- machining at least one clevis (5) on the outer surface of the ferrule (2),
- forming the release cut-out (7b) of the flange (3, 4) so that the clevis (5) is exposed,
- boring (6) the clevises (5),
- forming the access cut-out (7a) in the flange (3) coaxially with the bore (6) of the clevis (5).
